# EUROPÄISCHE PATENTANMELDUNG

(11) **EP 1 298 549 A1**
(43) Veröffentlichungstag der Anmeldung: **02.04.2003**
(21) Anmeldenummer: 01123172.7
(22) Anmeldetag: 27.09.2001
(51) Int. Cl.: G06F 17/60

(54) **Reiseüberwachung**

(71) Anmelder: Siemens Mobile Travel Solutions GmbH, 85356 München (DE)
(72) Erfinder: Baumgarten, Hans-Georg, 81667 München (DE); Fricke, Hans-Christian, 31224 Peine (DE); Heimannsfeld, Klaus, 81671 München (DE); Schwab, Christof, 84085 Landquaid (DE); Seewald, Maik, 85354 Freising (DE)
(74) Vertreter: Berg, Peter, Dipl.-Ing.

(57) **Zusammenfassung**

Die Erfindung erleichtert multimodale Reisen durch ein Verfahren zur Informationsversorgung (11) eines reisenden Telekommunikationsteilnehmers (1) während des Wechsels von einem Transportmittel (3) eines Reiseabschnitts einer für den Telekommunikationsteilnehmer gebuchten Reise (3,9) zu einem weiteren Transportmitteln (9) eines weiteren Reiseabschnittes der Reise,
wobei während der Reise der zeitliche und örtliche Ist-Verlauf (16,18) der Reise erfasst und mit dem mittels Buchungsdaten zur gebuchten Reise bestimmten Soll-Verlauf (15, 17, 19) hinsichtlich Abweichungen verglichen wird,
wobei unter Berücksichtigung von Abweichungen des Ist-Verlaufes vom Soll-Verlauf Transportmittelwechselinformationen (11, 19-21, 23) betreffend zum Wechsel erforderliche Aktivitäten erstellt werden
und Transportmittelwechselinformationen an den Telekommunikationsteilnehmer (1) übermittelt werden (12, 2).

## Beschreibung

Die Erfindung betrifft Verfahren und Vorrichtungen zur Information eines reisenden Telekommunikationsteilnehmers während des Wechsels von einem Transportmittel eines Reiseabschnitts einer für den Telekommunikationsteilnehmer gebuchten Reise zu einem weiteren Transportmitteln eines weiteren Reiseabschnittes der Reise.

Aufgabe der vorliegenden Erfindung ist es, möglichst einfach und effizient einen Telekommunikationsteilnehmer während einer für ihn gebuchten Reise mit Informationen betreffend einen bevorstehenden oder aktuellen Wechsel von einem Transportmittel eines Reiseabschnitts einer für den Telekommunikationsteilnehmer gebuchten Reise zu einem Transportmitteln eines weiteren Reiseabschnittes zu versorgen. Die Aufgabe wird jeweils durch die Gegenstände der unabhängigen Ansprüche gelöst.

Bei der Buchung einer Reise werden üblicherweise neben Hotels etc Transportmittel (wie z.B. S-Bahn zum Flughafen,. Flug, Anschlusszug, Zug, Mietwagen) etc. für Reiseabschnitte der Reise gebucht. Sowohl für Privatreisende, welche üblicherweise aus Kostengründen nicht- umbuchbare Transportmittel (insbesondere Flüge) buchen wie auch für Geschäftsreisende, welche zwar umbuchbare Transportmittel buchen aber terminlich gebunden sind, ist ein effizienter Wechsel von einem Transportmittel zum nächsten Transportmittel von Bedeutung.

Die Buchung einer Reise umfasst jedoch üblicherweise nur Reisemittel wie Flugzeuge, Züge, Leihwagen. Die Erfindung erlaubt darüber hinaus eine Koordination von beim Wechsel zwischen Reisemitteln erforderlichen Aktivitäten und Information des Reisenden hierzu, insbesondere zu den Ortswechsel zwischen Reisemitteln erforderlichen Aktivitäten (Ortswechsel z.B. zu Fuß von der S-Bahn zum check- ingate am Flughafen Sicherheitskontrolle, Shuttlebus...) und die Buchung/Buchungsbestätigung von Reisemitteln betreffenden Aktivitäten (check- in, Gepäckaufgabe..). Um einen reisenden Telekommunikationsteilnehmer hierüber effizient zu informieren kann ein Soll-Verlauf einer Reise beispielsweise aus Eingaben zur Reise (Orte, Verkehrsmittel, Abfahrtszeiten..) und allgemeinen und/oder den Reisenden betreffenden Erfahrungswerten bestimmt werden; der Ist-Verlauf der Reise kann beispielsweise aus Ortungsinformationen (GPS des Mobilfunkendgerätes des Reisenden) oder (z.B. über das Internet etc erhältlichen) Informationen zu den vom Reisenden gebuchten und benutzten Verkehrsmitteln umfassen. Bei Abweichungen des Ist-Verlaufs vom Sollverlaufs können dem Reisenden (z.B. unter der in einem Server gespeicherten Telefonnummer seines Mobilfunkendgerätes) Informationen über Reiseabschnitts- Änderungen (wie geändertes Abfluggate oder Gleis oder Abflugzeit oder Abfahrtszeit) und/oder ihm offenstehende Alternativen übermittelt werden, wobei für die Beurteilung ob er das nächste Reisemittel noch erreicht, Erfahrungswerte, aktuelle Informationen und Ortsangaben (Wegstrecken zwischen Reisemitteln, übliche oder aktuelle Zeiten für Sicherheitskontrollen etc) berücksichtigt werden. Auch kann dem Reisenden mitgeteilt werden ob er das nächste Transportmittel seiner Reise noch erreichen kann bzw. ob er es nur noch rennend erreichen kann.
Dem Reisenden werden diese Informationen reiseabschnittsspezifisch bereitgestellt, also in für den Reisenden jeweils aktuell relevanter Weise, wie z.B. beginnend mit dem nächsten Reisemittel.
Aktivitäten bei der Nutzung, Rückgabe, Besteigen, Verlassen oder Wechseln von Transportmitteln sind beispielsweise die Planung von Umbuchungen von Transportmitteln, notwendigen Aktivitäten zur Nutzung, Rückgabe und zum Wechsel von Transportmitteln, Einholen von Berechtigungen, Beschaffung von Nutzungsberechtigungsdokumenten, beschaffen, vorhalten und vorzeigen, Durchlaufen von Kontrollen durchlaufen, Zurücklegen von Wegen zu Transportmittelzugangs- und -abgabepunkten, Entgegennahme und Rückgabe von Transportmitteln.
Die Information des Reisenden ist durch die Berücksichtigung seiner aktuellen Situation (insbesondere des Sollverlaufes seiner Reise) und des Sollverlaufes der Reise sehr zuverlässig.

Weitere Merkmale und Vorteile ergeben sich aus der nachfolgenden Beschreibung eines Ausführungsbeispiels anhand der anliegenden Zeichnungen: dabei zeigt:
- Fig. 1: schematisch einen Wechsel von Transportmitteln
- Fig 2: als Blockschaltbild die Übertragung von Transportmittelwechselinformationen an einen Telekommunikationsteilnehmer
- Fig. 3: einen Personal Tripstage Supervision & Execution Support Engine (PTSE), eingebettet in ein Lösungsumfeld
- Fig. 4: eine Abfolge der Verfahrensschritte

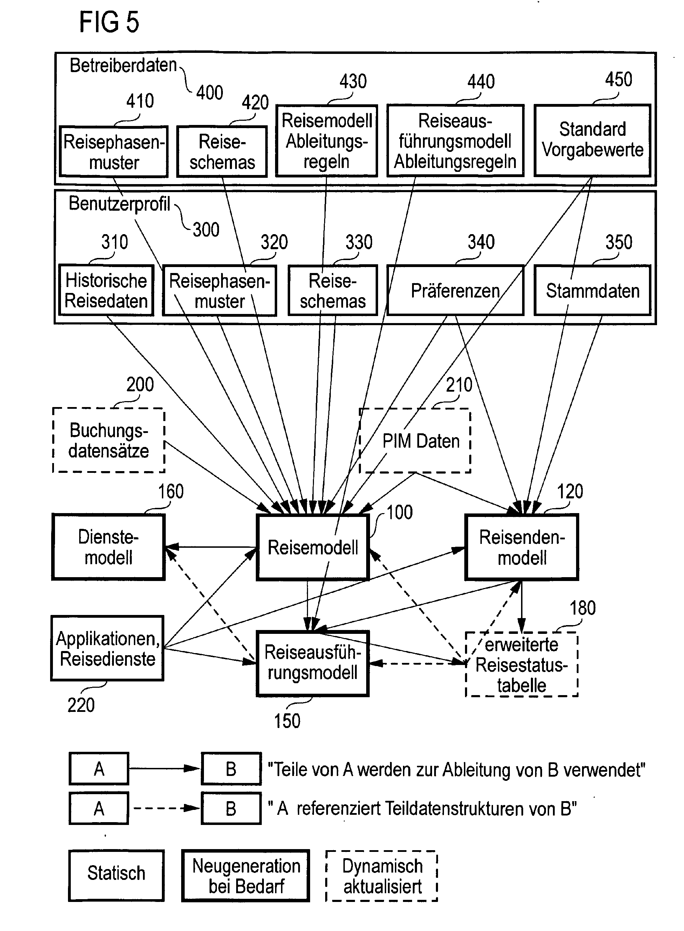

- Fig. 5: Abhängigkeiten der PTSESE Datenmodelle

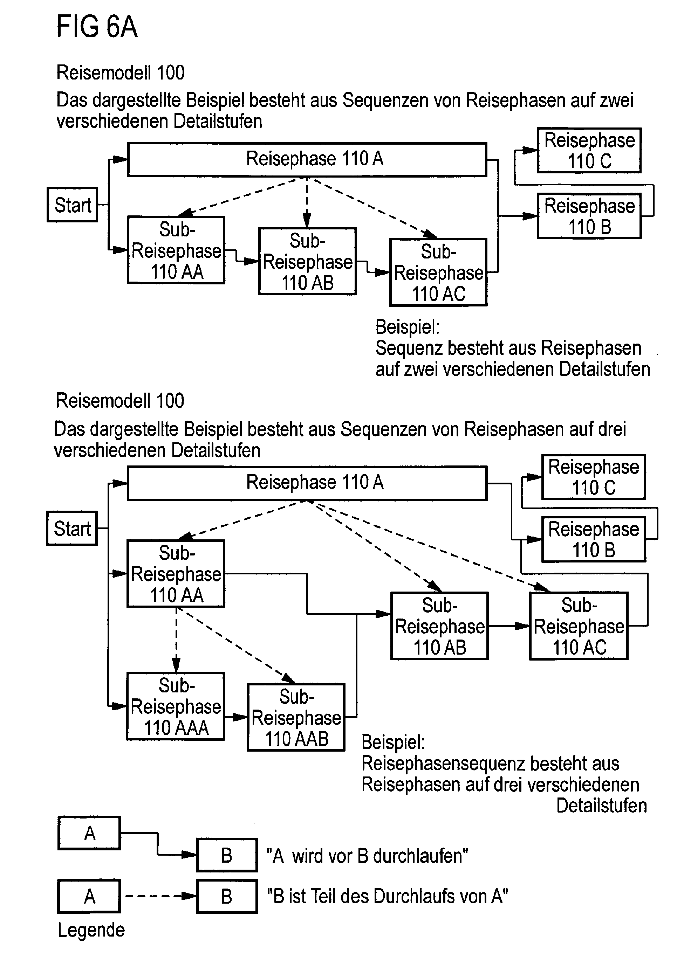

- Fig. 6a: ein PTSESE Datenmodell des Reisemodells

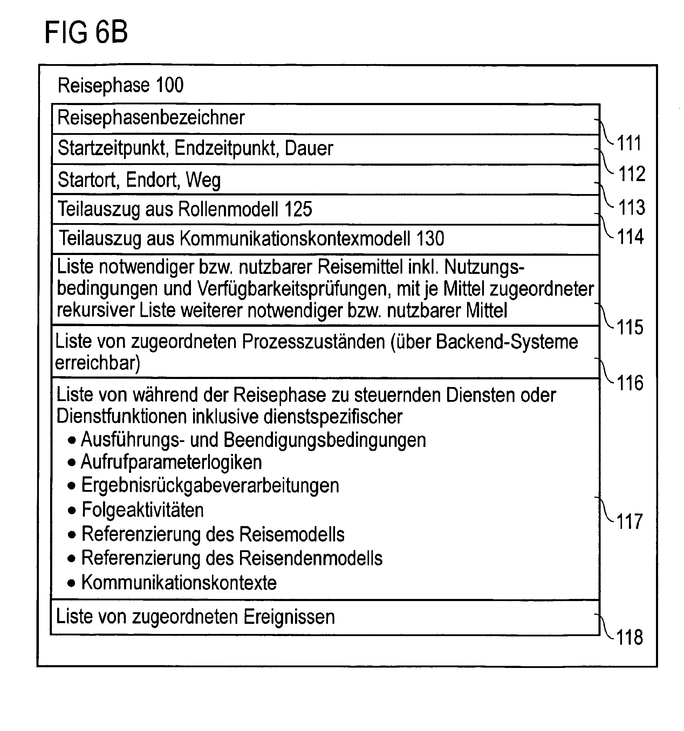

- Fig.6b: ein PTSESE Datenmodell einer Reisephase als Teil des Reisemodels

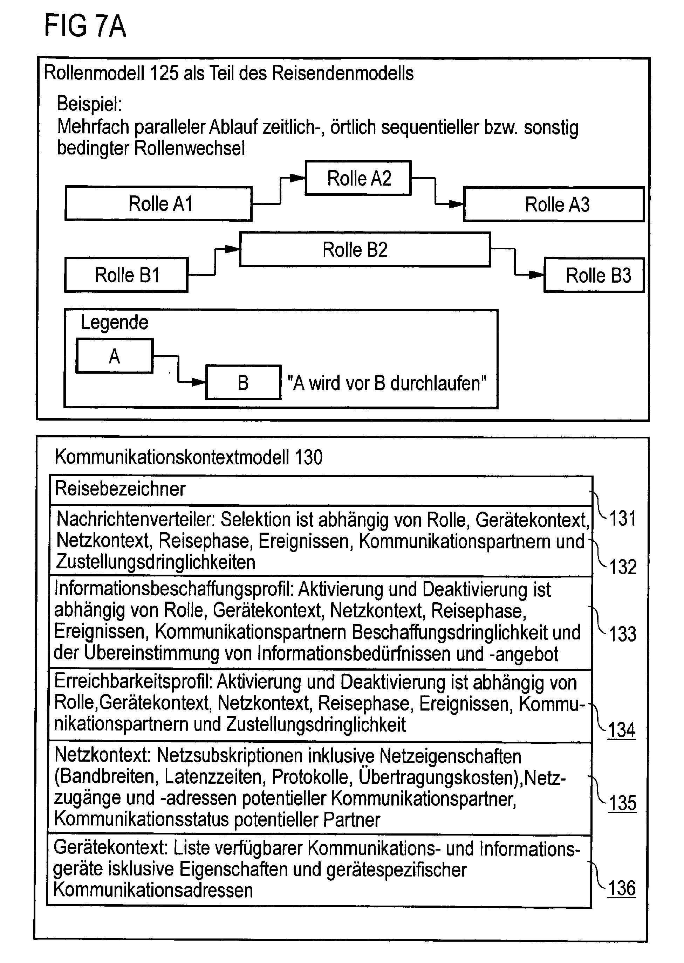

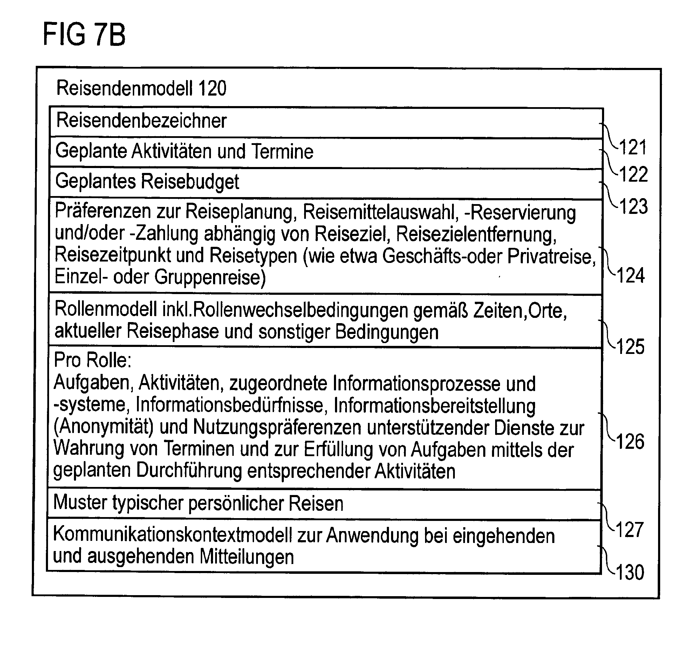

- Fig. 7 a,b: ein PTSE Datenmodell des Reisendenmodells

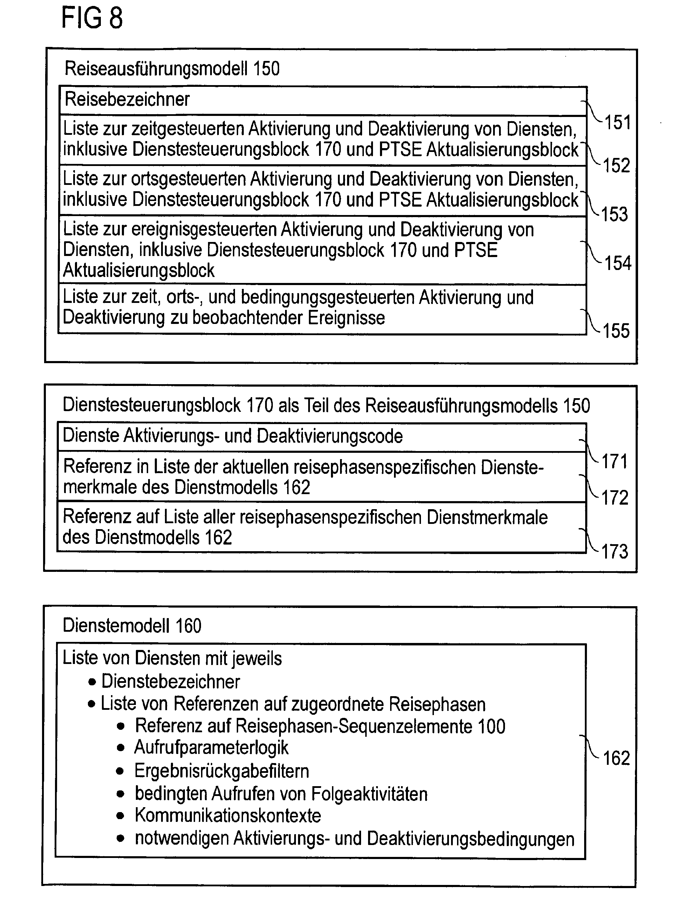

- Fig. 8: ein PTSESE Datenmodell des Reiseausführungsmodells

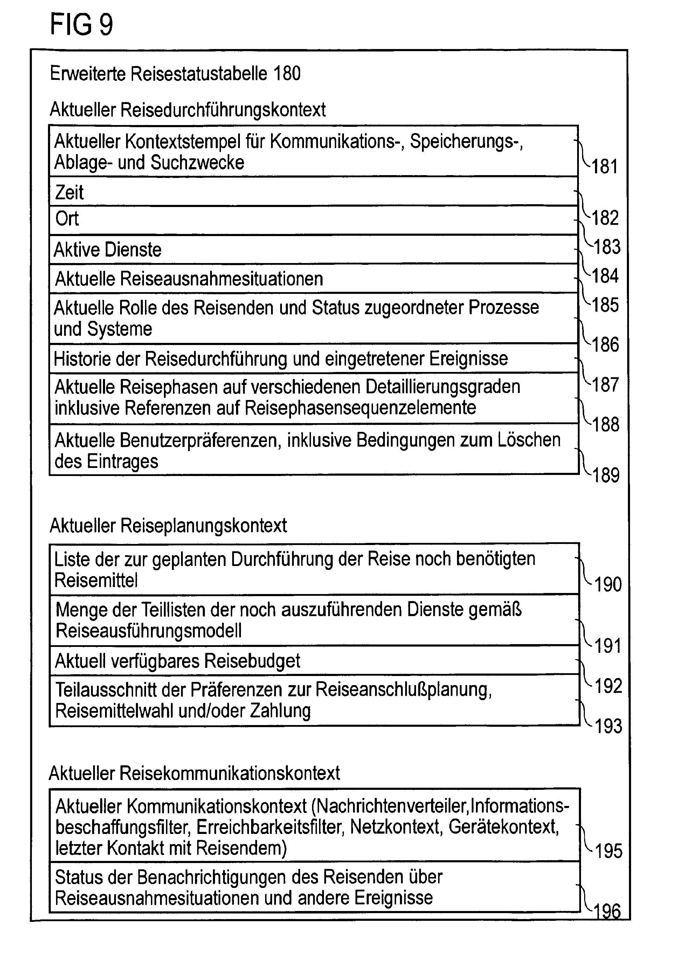

- Fig. 9: ein PTSESE Datenmodell der erweiterten Reisestatustabelle

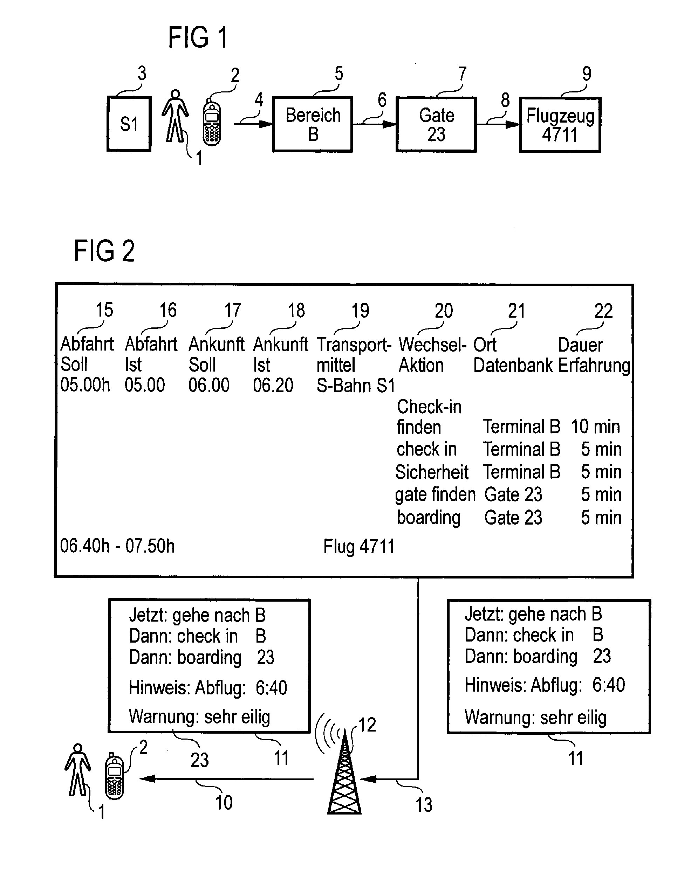

Figur 1 zeigt einen reisenden Telekommunikationsteilnehmer 1 mit einem Telekommunikationsendgerät 2, welcher nach einem ersten Reiseabschnitt seiner Reise in einer S-Bahn 3 am Flughafen ankommt und auf seinem Telekommunikationsendgerät 2 informiert wird, dass er in den Bereich B zum checkin muss, danach weiter zum Gate mit dem Bezugszeichen 7 muss und dann für den weiteren Reiseabschnitt seiner gebuchten Reise in das Flugzeug mit dem Bezugszeichen 9 einsteigen wird.

Damit der Telekommunikationsteilnehmer in Abhängigkeit von seiner aktuellen Reisesituation (S-Bahn verspätet) weiß ob er sich beeilen muss oder keine Aussichten mehr hat rechtzeitig zu kommen erhält er auf seinem Telekommunikationsendgerät 2 ferner gemäss Figur 2 per Mobilfunk 13, 12, 10, 2 seinen Wechsel vom Transportmittel S-Bahn 3 zum weiteren Transportmittel Flugzeug 9 betreffende Transportmittelwechselinformationen, die ihm hier erläutern, dass der check- in im Bereich B ist, dass er dann zum boarding nach B23 muss und dass das Flugzeug um 6:40 starte wird und dass es wegen seiner verspäteten S-Bahn sehr eilig ist, er also rennen sollte.

Dies wird dadurch ermöglicht dass in einem Server 14 (bei der Buchung der Reise (in z.B. einen anderen Server eingegebene und von dort abgerufene)) Soll-Informationen 15, 17, 21 betreffend geplante Abfahrtszeiten und Ankunftszeiten von Transportmitteln 3,9 auf Reiseabschnitten einer gebuchten Reise mit (aufgrund von Ortungsinformationen (GPS etc) des Telekommunikationsendgerätes 2 etc oder Verspätungsmeldungen (z.B. im Internet) gewonnenen) Ist-Informationen zum Reiseverlauf verglichen werden und unter Berücksichtigung von Erfahrungswerten 21, 22 zum Wechsel zwischen den gebuchten Transportmitteln (insbesondere zur Dauer 22 von hierfür erforderlichen Aktivitäten wie Sicherheitskontrolle, check- in, zum Schalter laufen etc)) Warnhinweise 23 (z.B.: sehr eilig, bitte rennen etc) erstellt (14) und an das Telekommunikationsendgerät übermittelt werden. Neben einer Übertragung 13, 12, 10 an den Telekommunikationsteilnehmer 1 per Mobilfunk ist auch eine Übertragung z.B. per wireless LAN etc möglich.

### Im folgenden wird ein Ausführungsbeispiel der Erfindung detaillierter erläutert:

Eine wesentliche Komponente des im folgenden geschilderten, beispielhaften Verfahrens zur reisephasenspezifischen Steuerung des Reisereparaturdienstes ist eine 'Personal Trip Supervision & Execution Support Engine' (= computergestützte Vorrichtung zur Ausführungsunterstützung und/ oder zur Überwachung einer Reise eines Reisenden; =PTSESE), welche die Steuerung und Bereitstellung reisebezogener Reparaturdienste ermöglicht.

Insbesondere die effiziente Bereitstellung eines solchen Massendienstes wird vom beschriebenen Ausführungsbeispiel realisiert. Dieses Merkmal ist besonders wichtig bei pro-aktiven Reparaturdiensten zur Zustellung von für den Reisenden wertvollen Informationen per Push- Service. Die PTSESE ist also ein informationsverarbeitendes und kommunizierendes System, welches reisephasenbezogene Kommunikationsdienste gemäß dem in der vorliegenden Erfindungsmeldung beschriebenen pro-aktivem Verfahren sehr effizient einer Vielzahl von Reisenden bereitstellt.

Die PTSESE kommuniziert mit dem Reisenden unter Verwendung von mobilen und festnetz-gebundenen Kommunikationsendgeräten, mittels synchronen und asynchronen, sowohl durch Kommunikationsendgeräte als auch durch von der Kommunikationsserverseitigen PTSESE initiierte Protokolle.

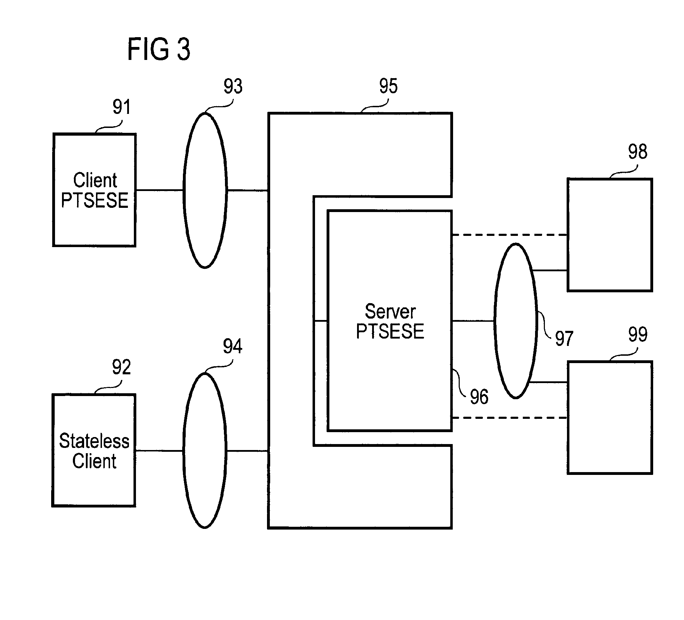

Für den praktischen Einsatz ist die PTSESE an existierende Kommunikationssysteme und Informationsverarbeitungssysteme anzuschließen. Abb. 3 zeigen die Einbettung der PTSESE in ein mögliches Lösungsumfeld. Die PTSESE (96) ist in ein beliebiges Kommunikations-Portal (95) integriert. An dieses Portal sind über Kommunikationsnetze (93, 94) festnetzgebundene und mobile Kommunikations- und Informationsendgeräte (91,92) angeschlossen. Teile der PTSESE können aus Performanz und Verfügbarkeitsgründen auch auf dem mobilen Endgerät ausgeführt werden (91). Zusätzlich ermöglicht die PTSESE die Nutzung zustandsloser, typischer browserbasierter mobiler Endgeräte (92). Die PTSESE ist an Kommunikationsnetze (97) angeschlossen.

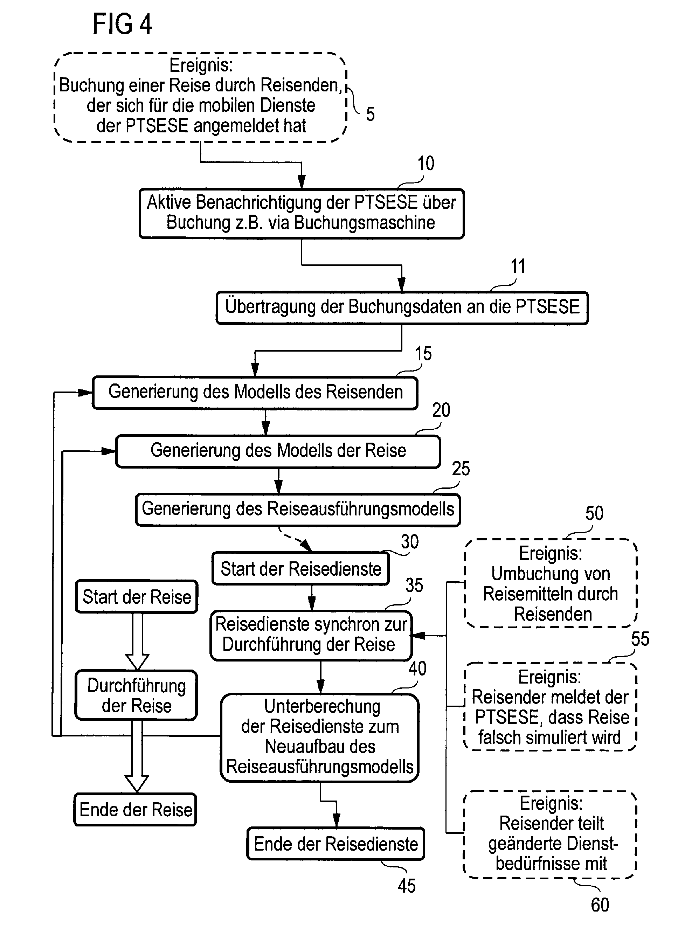

Die PTSESE wird durch Reisebuchungssysteme über getätigte Buchungen gemäß Figur 4 (5) informiert und angestoßen (10). Daraufhin erzeugt die PTSESE im Zuge einer Analyse- und Initialisierungsphase, ein **statisches Modell des Reisenden** (15, 120), ein **statisches Modell der gebuchten Reise** (20, 100) und leitet aus diesen Modellen das **statische Reisereparatur-Steuerungsmodell** (25, 150) ab.

### Teilverfahren zur Generierung reiseablaufspezifischer Reisereparaturdienste aus fragmentierten Datensätzen gemäß dem beschriebenen Ausführungsbeispiel:

Eine geplante persönliche Reise wird mit ihren Buchungsdatensätzen unter Verwendung eines Informationssystems erfasst und durch dieses IT-System, im weiteren Personal Trip Supervision & Execution Support Engine (PTSESE) genannt, in geordnete Sequenzen von Reisephasen (Reisemodell) gegliedert. Die Ordnung der Sequenzen ergibt sich dabei primär aus den zeitlichen und räumlichen Attributen der geplanten Reiseaktivitäten, unter anderem der geplanten Nutzung von gebuchten Reiseresourcen. Die Sequenzen der Reisephasen werden in elektronischer Form im Speicher der PTSESE als statisches Reisemodell abgelegt.

Aus dem Reisemodell und dem Modell des Reisenden wird das Reisereparatur-Steuerungsmodell generiert. Während der Ausführung der Reise durch den Reisenden wird dieses Reisereparatur-Steuerungsmodell abgearbeitet. Die im Reisereparatur-Steuerungsmodell mit den einzelnen Reisephasen verknüpften elementaren Reparaturfunktionen werden während dem Durchlaufen des entsprechenden Reiseabschnittes aktiv.

Im Zuge einer Reiseanschlußplanung oder der Neuplanung der Reise kann diese Reisereparatur-Steuerungsmodell von der PTSESE dynamisch ergänzt oder typischerweise teilweise ersetzt werden.

### Beschreibung der Verfahrensschritte:

Die Erstellung des Reisemodells (100), des Modells des Reisenden (120) und des daraus abgeleiteten Reisereparatur-Steuerungsmodells (150) erfolgt automatisch im Zuge der Verarbeitung der Buchungsdaten des Reisenden (200, 10, 11) durch die PTSESE. Die einzelnen Schritte des Verfahrens zur Erstellung eines Reisereparatur-Steuerungsmodell (150) sind im folgenden beschrieben.

### 1. Aufbau des Modells des Reisenden (15):

Benutzerprofile und explizite Benutzervorgaben initialisieren das **Modell des Reisenden** mit statischen Daten. Ergänzungen des Modells werden über Personal Information Management Systeme eingelesen. Das Modell des Reisenden beinhaltet:
- die geplanten und aktuell verwendeten mobilen Kommunikationsgeräte (136),
- dem während der geplanten Reise auftretenden Kommunikationskontext (130) bestehend aus:
   - Erreichbarkeitsprofil (134),
   - Kommunikationsnetzzugang (135),
   - Kommunikationskostenprofil (135),
   - Erreichbarkeitsprofilen von Kommunikationspartnern (135),
- den während der geplanten Reise ausgeübten Rollen des Reisenden (126) (anonym, nicht anonym, Geschäftreisenden, Privatreisender, Besprechungsteilnehmer, Hotelgast, Passagier, Fahrzeugführer) und den hiervon ableitbaren rollen-, orts- und zeitabhängigen Anforderungen an die Reiseüberwachungs- und Reparaturdienste (126)

### 2. Aufbau des Reisemodells (20):

Die PTSESE liest zunächst Buchungsdatensätze (200), Informationen aus persönlichen Informationmanagementwerkzeugen (PIM) (210) und Benutzervorgaben (310, 340) ein. Die Buchungsdatensätze und die PIM-Daten initialisieren das **Modell der Reise** (100). Zum Aufbau des Reisendenmodells werden auch die im **Benutzerprofil** (300) der PTSESE stehenden Präferenzen und Vorgaben für
- Benutzerspezifische Orte und relative Zeitangaben zur Aktivierung von Reiseüberwachungs- und -reparaturdiensten in Relation zu typischen Reisephasen wie z.Bsp.: zu Reisebeginn oder zum Ende der Reise.
- Präferenzen für die Nutzung von Reisemitteln (124) in Abhängigkeit von Reiseziel, Reisezielentfernung, Reisezeitpunkt und Reisetypen (wie etwa Geschäfts- oder Privatreise, Einzel- oder Gruppenreise),
- Muster für typische persönliche Reisen (127) (Sequenzen von Reisephasen)
eingelesen.

**Auswahl einzelner Reisephasenmuster und typischer Sequenzen:**
Die PTSESE wählt für das Modell der Reise ein passendes Reisephasenmuster aus einer vorgegebenen Menge von Reisephasenmustern aus. Es werden hierzu typische Reisephasenmuster von dem Reisereparaturdiensteanbieter in der PTSESE hinterlegt und vorgegeben. Im folgenden sind einige typische Reisephasenmustern aufgezählt
Reisebeginn, Am Wohnort zu Beginn der Reise, Weg vom Wohnort zum Abflug-Flughafen zu Beginn der Reise, An der Arbeitsstelle zu Beginn der Reise, Weg von der Arbeitsstelle zum Abflug-Flughafen zu Beginn der Reise, Am Abflug-Flughafen, Im Flieger, Am Ziel-Flughafen, Auf dem Weg zum Hotel, Im Hotel, Auf dem Weg zur Besprechung, Weg zum Abflug-Flughafen während der Rückreise, Am Abflug-Flughafen während der Rückreise, Im Flieger während der Rückreise, Am Ziel-Flughafen während der Rückreise, Weg zur Arbeitsstelle während der Rückreise, An der Arbeitsstelle nach der Rückreise, Weg zum Wohnort während der Rückreise, Am Wohnort nach der Rückreise.
Die Auswahl einer Menge von Reisephasenmustern, welche die gebuchte Reise am besten abbilden, kann durch manuelle Eingaben des Reisenden oder des Reparaturdiensteanbieters unterstützt werden. Ein Reparaturdiensteanbieter kann die Menge der vorgegebenen Reisephasenmuster ergänzen. Damit das beschriebene Auswahlverfahren automatisch, bzw. mit geringer Unterstützung des Reisenden funktioniert, müssen entsprechende Selektionsmerkmale in den Buchungsdatensätzen implizit enthalten, oder durch den Reparaturdiensteanbieter mit den Buchungsdatensätzen verknüpft worden oder implizit durch das Modell des Reisenden vorgegeben sein. Vorgaben für typische Reisephasenmuster im Modell des Reisenden beeinflussen also den Aufbau des Reisemodells.
Typische Modelle "ähnlicher" Reisen für bestimmte Typen von Reisenden können vom Reparaturdiensteanbieter als Schematas (nicht instanziierte Sequenzen von Reisephasen) vorgegeben und in der PTSESE abgelegt werden. Die PTSESE und der Reisende können dann gebuchte Reisen mit den vorgegebenen Schematas vergleichen und verknüpfen.
Reisephasen werden auf unterschiedlichen Detailebenen modelliert und abgearbeitet. Zudem läßt sich eine Reisephase hierarchisch in Sub-Reisephasen zergliedern. Typischerweise reicht zur Steuerung der Erreichbarkeit die Modellierung der Reisephasen auf zwei oder drei unterschiedlichen Verfeinerungsgeraden aus.

### Reisephasenattribut Reisemittel:

Ein wesentliches Selektionsmerkmal zur Identifizierung von passenden Reise-phasenmustern aus einer Menge von vorgegebenen Reisephasenmustern ist die verwendete Reiseresource, die während einer Reisephase überwiegend genutzt wird (z.Bsp.: Flugzeug, Kfz, S-Bahn, zu Fuß,...). Diese Reiseresource wird beim Einlesen von Buchungsinformationen als Attribut erfaßt und kann daher mit dem entsprechenden Attribut der vorgegebenen Reisephasenmusters verglichen werden.
Innerhalb einer Reisephase wird typischerweise ein Reisemittel hauptsächlich genutzt. Zusätzlich zu dieser Hauptresource sind auch abhängige Reiseresourcen im Reisemodell darstellbar.
Z. Bsp.: Ein Gate ist eine einem Flug zugeordnete abhängige Resource, deren Verfügbarkeit und Status vom Reiseüberwachungsdienst OnTrip festgestellt werden muß.

### Reisephasenattribut Reisemittelanbieter:

Ein weiteres wesentliches Selektionsmerkmal zur Identifizierung von passenden Reisephasenmustern aus einer Menge von vorgegebenen Reisephasenmustern ist der Reisemittelanbieter. Der Reisemittelanbieter wird beim Einlesen von Buchungsinformationen als Attribut erfaßt und belegt daher das entsprechenden Attribut des vorgegebenen Reisephasenmusters im Reisemodell. Die Nutzungsbedingungen bestimmter Reisemittel können sich je nach Reisemittelanbieter unterscheiden. Typischerweise durch den Betreiber der PTSESE oder in speziellen Fällen durch den Reisenden können entsprechende Regeln zur Beschreibung der vertragskonformen Nutzung vorgegeben werden. Auch die Verfahren zur Überprüfung der Verfügbarkeit von Reisemitteln können variieren je nach Reisemittelanbieter.

### Übersetzung von Buchungsdaten in Reisephasenbeschreibung:

1. Die PTSESE liest Informationen aus den vorliegenden Buchungsdatensätze ein. Da diese Buchungsdatensätze gemäß den Vorgaben vielfältiger Reiseagenturen und Buchungssysteme erstellt wurden, müssen sie durch die PTSESE in ein einheitliches Format **(generisches Buchungsdatenformat)** übersetzt werden. Die Buchungsdatensätze können zu diesem Zweck in vielfältiger elektronischer Weise in die PTSESE übernommen werden.
2. Die PTSESE trägt die im generischen Buchungsdatenformat vorliegenden Werte eines Buchungsdatensatzen in die Attribute der ausgewählten Reisephasenmuster ein.

### Reisephasenattribute Start- und Zielort, bzw. Start- und Zielerreichungszeitpunkt:

- Beispiel: Nach dem Einlesen von Personal Name Records (PNRs), liegen diese im generischen Buchungsdatenformat vor. Eine Flug-Reisephase beinhaltet die Attribute Start- und Zielort, bzw. Start- und Landezeitpunkt. Diese Attribute werden mit den Werten aus dem generischen Buchungsdatenformat der PNRs belegt.
- Die belegten (instanziierten) Attribute eines Reisephasenmusters ermöglichen die Steuerung der Reisereparaturdienste, gemäß dem Reisereparatur-Steuerungsmodell, während des Ablaufs einer konkret geplanten und gebuchten Reise ab. D.h. die mit einer Reise verbundenen Buchungsdatensätze für Reisemittel instanziieren das Modell einer geplanten Reise, und das abgeleitete Reisereparatur-Steuerungsmodell und definieren damit die zeitlichen und örtlichen Vorgaben im Sollverlauf der gebuchten Reise.

**Aufbau der Sequenzen der Reisephasen:**

Die Reisephasen werden nun von der PTSESE gemäß des hierarchischen Verfeinerungsgerades sortiert, und in Sequenzen von Reisephasen verschiedener Detailierungsgrade angeordnet. Anhand der zeitlichen und räumlichen Ordnung der aus konsistenten Buchungsdaten abgeleiteten Reisephasen können diese von der PTSESE in eine Sequenz gebracht werden. Typischerweise reicht zur Steuerung der OnTrip Services die Modellierung der Reisephasen auf zwei oder drei unterschiedlichen Verfeinerungsgeraden aus.

### 3. Aufbau des Reisereparatur-Steuerungsmodells:

- Pro-aktive Dienste (Push) binden nun Reparaturfunktionen an das Durchlaufen bestimmter Reisephasen. Reparaturfunktionen können dabei auch an mehrere Reisephasen und zeitlich oder örtlich relativ an das Durchlaufen von Reisephasen gebunden werden.
- Das so ergänzte Reisereparatur-Steuerungsmodell wird in Datenstrukturen übersetzt, die bei der Steuerung der Dienste während der Reise effizient interpretiert werden können.
Weitere Merkmale des Beispielverfahrens:
- **Ändern sich** die **Buchungen,** dann wird die PTSESE von den angeschlossenen Buchungssystemen entsprechend informiert. Die PTSESE berechnet dann Teile des Reisemodells neu. Entsprechend wird das Reisereparatur-Steuerungsmodell teilweise neu aufgebaut.
- Die automatisch erstellten Reisephasen und die daran **gebundenen Reparaturfunktionen** werden miteinander assoziiert und gegebenenfalls durch den Reisenden unter Nutzung von Admininstrationswerkzeugen ergänzt und verfeinert. Wird eine Reparaturfunktion lediglich in einer sehr speziellen Reisephase (detailierter Teilprozess) aktiv, so muss die entsprechende Reisephase hinreichend genau modelliert und das entsprechende Muster zum Aufbau des Reisemodells verfügbar sein.
- Die **Rollen,** die ein Reisender im Zuge der Reisens ausübt, sind mit rollenspezifischen Reparaturbedürfnissen verknüpft und werden mit den Reisephasen verknüft, in denen der Reisende in der gegebenen Rolle aktiv ist.
- Für die Generierung des Reisereparatur-Steuerungsmodells ist eine **unvollständige lückenhafte Sequenz von Reisephasen** ausreichend, solange es keine Wiedersprüchen in den Buchungsdatensätzen gibt. Schon die Instanziierung einzelner Reisephasen ermöglicht die situationsbezogene Reiseerreichbarkeit. Insbesondere schlägt die PTSESE zur Vervollständigung des Reisereparatur-Steuerungsmodells persönliche Vorgaben, bzw. falls diese nicht vorhanden sind, Systemvorgaben vor. Diese vorgegebenen Muster und Werte kann der Benutzer durch persönliche Reparatur-Vorgaben in seinem Profil ergänzen.
Erläuterung des Ausführungsbeispiels anhand der Figuren:
- Die PTSESE wird also durch Reisebuchungssysteme über getätigte Buchungen gemäß Figur 4 (5) informiert und angestoßen (10). Daraufhin erzeugt die PTSESE im Zuge einer Analyse- und Initialisierungsphase, ein **statisches Modell des Reisenden** (15, 120), ein **statisches Modell der gebuchten Reise** (20, 100) und leitet aus diesen Modellen das **statische Reisereparatur-Steuerungsmodell** (25, 150) ab.
   - Das **statische Modell der gebuchten Reise**(100) besteht aus der Sequenzen der von der PTSESE aus den Buchungsdaten abgeleiteten bzw. der ausgewählten ergänzenden Reisephasen (100). Allgemein könnten im Reisemodell (100) beliebige rekursiv verfeinerte Sequenzen von Reisephasen modelliert werden. In der Praxis reichen jedoch typischerweise drei Detailsstufen aus. Die modellierten Reisephasen (110) beinhalten Attribute, wie z. Bsp.: die an diese Reisephasen gebundenen, notwendigen bzw. nutzbaren Reisemitteln (115). Attribute einzelner Reisephasen werden dabei mit Benutzerereichbarkeitsprofilen und - präferenzen aus dem Modell des Reisenden (120) belegt. Die Bereitstellung der auf die Bedürfnisse des Reisenden zugeschnittener Reparaturfunktionen kann damit reisephasenbezogen geplant werden.
   - Das **Modell des Reisenden** (120) wird weiter unten erläutert.
   - Das **statische Reisereparatur-Steuerungsmodell** (150) steuert die Bereitstellung der gewünschten Reisedienste synchron zur Durchführung der Reise durch den Reisenden. Das heißt, das die Bereitstellung der auf die Bedürfnisse des Reisenden zugeschnittener Reparaturfunktionen, synchron zum tatsächlichem Durchlaufen der Reisephase also pro-aktiv erfolgt.
- Zum Aufbau des Reisereparatur-Steuerungsmodells werden alle Reparaturfunktionen für die zeitlich und örtlich gesteuerte Ausführung synchron zur geplanten Durchführung der Reisephasen vorkonfiguriert (152, 153, 154, 155). Das bei der Planung der Reisedurchführung vorliegende Wissen (200, 210, 300, 400) über die gebuchte Reise und den Reiseprozess wird also in Laufzeitstrukturen (150) zur Steuerung der synchron zur Reisedurchführung bereitgestellten Reparaturfunktionen compiliert. Dieser Systemprozess verwendet eine Menge von Regeln (440), die den Beginn, das Ende (152, 153, 154, 155), und die konkreten Reparaturfunktionen im Kontext der aktuellen Reisesituation (z.Bsp.:
   - Durch den reiseabschnittsspezifischen Kommunikationskontext werden die Benachrichtigung des Reisenden bzw. der Aufbau von Kommunikations-sessions gesteuert.
   - Zeiten der nächsten Wiederereichbarkeit des Reisenden gemäß nachfolgender Reiseabschnitte,
   - Eigenschaften der Kommunikationsmittel (Endgeräte und Netzkontext) bei der nächsten Wiederereichbarkeit gemäß nachfolgender Reiseabschnitte
   - Überwachung der Verfügbarkeit relevanter Kommunikationsnetze) in Abhängigkeit von
      - Servicepräferenzen des Reisenden (124, 125, 126, 130),
      - zeitlichen und örtlichen Parameter einer Reisephase (112,113),
      - relativen und absoluten Zeiten und Orte (112,113),
      - dem potentiellen Eintreffen von für die Durchführung der persönlichen Reise relevanten Ereignissen (118),
      - Buchungstypen (124),
      - verwendeten Reisemitteln (115) und
      - Reisetypus (410, 420, 310, 320, 330, 127) beschreiben. Die verwendeten Regeln zur Deduktion der Überwachungsfunktionen gemäß der Reiseanbieterspezifischen Nutzungskriterien für multimodale Reisemittel werden typischerweise vom Betreiber des Systems vorgegeben (430, 440). Darüber hinaus können Regeln vom Endbenutzer aktiviert bzw. deren Regelmuster parameterisiert werden.
- Die PTSESE legt also vor dem Beginn der Bereitstellung von Reisediensten das **Reiserepartur-Steuerungsmodell zur zeit-, orts-, und/oder ereignisgesteuerten Ausführung von Reparaturdiensten (150)** an. Wird die Reise wie geplant durchgeführt, dann beinhaltet die statische Datenstruktur des Reisereparatur-Steuerungsmodells (Sequenz von Dienstaktivitäten mit verknüpften Sollwerten zur zeit-, örtlichen- und/oder ereignisgesteuerten Steuerung der Reparaturdienste) alle zur Steuerung der reisephasenspezifischen Überwachungs- und Reparaturdienste notwendigen Daten. Zur Aktivierung und Deaktivierung von Diensten reicht dann ein Vergleich der Variablen in der erweiterten Reisestatustabelle (180, 182, 183, 184) mit den dienstspezifischen Konstanten im Reisereparatur-Steuerungsmodell (152-155) aus. Das heißt, das Anlegen dynamischer Datenstrukturen zur Steuerung der Reparaturdienste ist nicht zwingend erforderlich. Es können also sehr effizient verarbeitbare und damit massendienstfähige Laufzeitdatenstrukturen zur Steuerung der Erreichbarkeit verwendet werden.
- Im Fall von Reiseausnahmesituationen, und damit einhergehenden spontaner Reise-Umplanungen/-Umbuchungen wird die Bereitstellung der Reisedienste unterbrochen, das statische Reisereparatur-Steuerungsmodell ganz oder teilweise aktualisiert und ersetzt, und schließlich die Bereitstellung der Reisedienste fortgeführt.

Das Modell des Reisenden beinhaltet:
- Namen, Adressen und Firmenzugehörigkeit des Reisenden (121)
   - Angaben zu den während der Reise zur Kommunikation potentiell nutzbaren Kommunikationsnetzen (Netzkontext: 135), inklusive Netzzugangsarten und Kommunikationskostenprofilen, und mobilen Endgeräten (Gerätekontext: 136),
   - Angaben zur Steuerung der Erreichbarkeit im Falle typischerweise auftretender Kommunikationskontexte
      - Ein-/Ausschalten der Weiterleitungsfunktion,
      - Konfiguration der Anrufweiterleitung zu bestimmten Kommunikationsendgeräten
      - Parameter (Zieladressen, Nachrichtentyp) und Bedingungen (Zeitpunkt, aktueller Reiseabschnitt) beim Verschicken von Benachrichtigungen an Reisende im Fall von eingehenden Anrufen

- die Rollen und Rollenwechsel des Reisenden (125, 126) (Z.Bsp.: anonym, persönlich, Käufer, Geschäftreisenden, Privatreisender, Besprechungsteilnehmer, Hotelgast, Passagier, Fahrzeugführer) und
- geplante Aufgaben, Aktivitäten und Termine (122, 123) und ableitbarer rollen-, orts- und zeitabhängige Reparatur bedürfnisse (126)
- Präferenzen für die Nutzung von Reiseresourcen in Abhängigkeit von Reiseziel, Reisezielentfernung, Reisezeitpunkt und Reisetypen (wie etwa Geschäfts- oder Privatreise, Einzel- oder Gruppenreise) (124)
- Änderungen der Servicebedürfnisse im Modell des Reisenden können eine Neukonstruktion des Reisereparatur-Steuerungsmodells (150) nach sich ziehen.
- Im **Benutzerprofil** (300) der PTSESE stehen Präferenzen (340) für
   - Benutzerspezifische Orte und relative Zeitangaben welche typische Reparaturfunktionen in Relation zu typischen Reisephasen wie z.Bsp.: zu Reisebeginn oder zum Ende der Reise auslösen.
   - Präferenzen für die Nutzung von Reiseresourcen in Abhängigkeit von Reiseziel, Reiseziel-entfernung, Reisezeitpunkt und Reisetypen (wie etwa Geschäfts- oder Privatreise, Einzel- oder Gruppenreise),
   - Muster für typische persönliche Reisen (Sequenzen von Reisephasen) (310, 320, 330)

### Teilverfahren zur Steuerung situationsbezogener Reparaturdienste für Reisende:

Die PTSESE arbeitet während der Bereitstellung des Reisereparaturdienstes die **Reisereparatur -Steuerungstabelle** (150) ab.

Das Verfahren verwendet zusätzlich zur Ortsinformation (113, 183) zeitliche Informationen (112, 182) zur Identifikation der aktuellen Reisephase innerhalb der Sequenz von Reisephasen (110) zur geplanten Durchführung der Reise. Die aktuelle Reisephase (188), deren Verfeinerungen und Attribute, und eine Referenz auf die aktuelle Reisephase als Element der Sequenz der Reisephasen im Reisemodell (100, 188)) wird dabei zusätzlich zum Reisereparatur-Steuerungsmodell (150) in einer **erweiterten Reisestatustabelle** (180) abgelegt. Die PTSESE nimmt dabei an, dass sich der Reisende zu einem bestimmten Zeitpunkt in einer bestimmten auf verschiedenen Detailebenen modellierten Reisephase (110) oder aber in einer entsprechenden von der PTSESE abgeleiteten Reisezwischenphase befindet. Die bereitgestellten Reparaturfunktionen (150) sind mit der, in der erweiterten Reisestatustabelle ausgewiesenenen, aktuellen Reise(zwischen)phase (188) und den während der Planung vorkonfigurierten Ereignissen (152-155) verknüpft. Das Eintreten von Ereignissen (152-155) löst gegebenenfalls die Ausführung reisephasenspezifischer Reparatursteuerungsaktivitäten (152-155) aus.

Reparatursteuerungsaktivitäten werden im Dienstemodell(160) an Bedingungen gebunden (150, 152-155) und der PTSESE zur bedingten Ausführung übergeben. Zusätzlich können reisephasengebundene Parameter (117) an Reparaturfunktionen übergeben werden.

Die Steuerung wirkt sich dabei auf folgende Funktionen der Dienste aus.
- **Aktivierung und Deaktivierung von Reparaturfunktionen** (152-154). Reparaturfunktionen deren Ausführung und Deaktivierung an das Erreichen bestimmter Reisephasen gebunden sind ermöglichen einen effizienten Einsatz der Rechen- und Speicherkapazitäten der PTSESE. Dieses Merkmal umfaßt auch die Ausführung in Abhängigkeit von der zeitlich und örtliche relative Nähe zu bestimmten ausgezeichneten Reisephasen. Dies gilt besonders für Pro-aktive Dienste, die unabhängig vom aktuellen Bedarf des Reisenden, im System ausgeführt werden.
- **Reisekontextbezogene Parameterisierung** der Reparaturfunktionen wird durch zwei PTSESE-Verfahren unterstützt.
   1. Reparaturfunktionen welche Variablen der erweiterten Reisestatustabelle (180) auslesen, verarbeiten direkt den aktuellen Reisekontext.
   2. Reparaturfunktionen können unter Nutzung der reisephasenspezifischen Modellreferenzen (172, 173, 162), reisephasenspezifische Informationen nutzen und spezifische Vor- und Nachbearbeitung. Der Kern der Reparaturlogik bleibt davon unberührt.
- Informationsspeicherung zu Abrechnungs- und Verifikationszwecken (Logging) als auch die Abspeicherung persönlicher reisebezogener Ruflisten erfolgt unter Verwendung des Reisekontextstempels (181).

Charakteristika des beispielhaften Reisereparatur-Steuerungsverfahrens:
- Während der Durchführung der Reise überprüft die PTSESE durch Vergleiche von Elementen der erweiterten Reisestatustabelle mit den entsprechenden Vorgaben des statischen Reisemodells, ob die Sequenz der Reisephasen wie geplant durchlaufen wird. Hierzu werden laufend Uhrzeit, Ortsinformationen, Prozeßinformationen von Backend-Systemen (185, 186, 187, 188) und Benutzereingaben ausgewertet und als Istwerte mit den zeitlichen, örtlichen, und Prozessparameter Sollwerten der Reisephasen im Reisemodell (100, 111, 112, 113, 114, 115, 116, 117, 118) verglichen.
- Passen ein oder mehrere Istwerte mit den vorgegeben Sollwerten genau einer Reisephase überein, so kann die aktuelle Reisephase während der Durchführung der Reise eindeutig identifiziert werden. Durch die streng geordnete Sequenz der Reisephasen (100) ist dieser Fall typischerweise gegeben. Zur Klärung verbleibender Mehrdeutigkeiten oder Widersprüche, z.Bsp. falls der Reisende anders reist als geplant, kann die PTSESE die aktuelle Reisephase (188) beim Reisenden erfragen. Gegebenenfalls wird eine PTSESE-Ausnahmesituation festgestellt und ein Wiederaufsetzen des Systems mit entsprechender Neuanlage der verwendeten Modelle ausgelöst.
- Im Fall von Reiseausnahmesituationen, und damit einhergehenden spontaner Reise-Umplanungen/-Umbuchungen wird die Bereitstellung der Reisedienste unterbrochen, das statische Reisereparatur-Steuerungsmodell ganz oder teilweise aktualisiert und ersetzt, und schließlich die Bereitstellung der Reisedienste fortgeführt.
- Die PTSESE verwaltet während der Bereitstellung der persönlichen Reisedienste ein **Modell des Reisenden** (120). Dieses Modell wird durch Informationen aus dem **Benutzerprofil** (300) und den aus **Personal Information Management** Systemen (210) eingelesenen Terminen (Orte und Zeiten), geplanten Aktivitäten und Kontakten (Orte und Namen) initialisiert. Diese konkreten Daten (121, 122, 126) werden rollenspezifisch im Reisendenmodell organisiert. Eine Rolle (110) definiert dabei einen allgemeiner gültigen Informationsbedürfnis-, Aktivitäts- und Kommunikationskontext eines Reisenden. Dynamische Aktualisierungen von Daten des Reisendenmodells, während der Durchführung der Reise, werden in der erweiterten Reisestatustabelle (180) bereitgestellt.
- Die PTSESE arbeitet **pro-aktiv** die im Reisereparatur-Steuerungsmodell aufgelisteten Dienste gemäß der assoziierten Bedingungen ab. Dies erfolgt parallel zur Duchführung der eigentlichen Reise durch den Reisenden.
- Die PTSESE ermittelt anhand des zeitlichen, räumlichen und Prozess-Fortschritts innerhalb des referenzierten Reisemodells (100) eine für den Reisenden als **"aktuell" angenommene Reisephase** (182, 183, 188). Auch auf Basis von aktuellen Aufenthalts- und Prozesstatusinformationen des Reisenden (186), welche die PTSESE während der Reise über angeschlossene Backend-Systeme ermittelt, kann das System die Reisesimulation mit der tatsächlichen Durchführung der Reise abgleichen.
- Der Reisende und der Betreiber können die aktuell durch das System, als für den Reisenden **"aktuell" angenommene, Reisephase** (188) **korrigieren.** (Dies ist ähnlich zur Eingabe einer neuen Position durch den Fahrzeugführers zum Wiederaufsetzen eines Fahrzeugnavigationssystems zu sehen.) Der Reisende wird dazu typischerweise aus der Sequenz der geplanten Reisephasen (100) seine aktuelle Reisephase (110) auswählen und der PTSESE mitteilen.
- Der **Reisefortschritt und gegebenenfalls auftretende Abweichungen** zwischen der Simulation der geplanten bzw. gebuchten Reise und der tatsächlichen Reise werden aufgrund der Analyse von OnTrip-Informationen während des Fortschritts der tatsächlichen Reise vom Informationssystem erkannt. Dazu wird ab dem Start der Reisedienste (30) der Ist-Ablauf mit dem geplanten Reiseablauf verglichen. Es wird also pro-aktiv vom Rechnersystem die aktuelle Reisephase (188) ermittelt bzw. vorhergesagt.
- Messaging-Dienste von Drittanbietern können durch Nutzung der PTSESE über eine Programmierschnittstelle den aktuellen Reparaturstatus (189), und den Kommunikationskontext inclusive Kontaktadressen (186), Kommunikationsnetzeigenschaften in Erfahrung bringen. Diese Dienste können durch die Nutzung dieser Schnittstelle reisephasenspezifisch unterstützt werden. Die Bereitstellung dieser Reisestatusinformationen zur Erreichbarkeit (182-188)) an Applikationen und/oder Backend-Systeme kann in Abhängigkeit von der aktuellen Rolle des Reisenden im Bezug zum Anrufendem erfolgen. In welcher Reisephase welche Rolle ausgeübt wird, wird dabei im Reisendenmodell (125) der PTSESE definiert.
- Damit die PTSESE performant realisiert werden kann, muß das in der PTSESE verarbeitete modellierte Reisewissen vor Bereitstellung der reisespezifischen Reparaturdienste **in effiziente Laufzeitdatenstrukturen** (150) übersetzt werden, welche dann interpretiert werden.
   - Zentrale Datenstrukturen sind dabei die Listen zur zeit-, und ortsgesteuerten Kontrolle der Reparaturfunktionen während der Reise (152-155), inklusive des Reisereparaturdienstesteuerungsblockes (170). Bei der Aktivierung eines Dienstes wird die im Reisereparaturdienstesteuerungsblockes enthaltene Referenz (172) auf die Dienstemerkmale der aktuellen Reisephase (188) innerhalb der Liste aller reisephasenspezifischen Leistungsmerkmale des Reparaturdienstemodells (162) gesetzt.
   - Diese wird ergänzt um die Menge der ereignisgesteuerten Reparaturfunktionen während der Reise. Hierzu melden sich Reparaturfunktionen während der Initialisierung des Systems bei Ereignisverwaltungsdiensten an. Dabei werden durch die Interpretation des Reisemodells (100) insbesondere **reisephasenbezogene Ereignisse** (118) wie etwa das Erreichen einer bestimmten Reisephase (110) unterstützt.
- Falls keine OnTrip-Informationen dem elektronischen Informationssystem zur Verfügung stehen, kann im einfachsten Fall als Istverlauf, der zeitliche Fortschritt der geplanten gebuchten Reise vom elektronischen Informationssystem verwendet werden.
- Typischerweise reicht für eine benutzerfreundliche Steuerung der Reisereparaturdienste die Modellierung der mit den OnTrip Services verknüpften Reisephasen auf zwei oder drei unterschiedlichen Verfeinerungsgeraden (100) aus.
- Die **Abarbeitung** einer Reise, modelliert durch Sequenzen von unterschiedlich detaillierten Reisephasen (100) erfolgt dabei **quasi parallel in den verschiedenen Detailebenen.**
- Wird bei der konkreten Durchführung einer Reise, eine Änderung bei der Durchführung einer geplanten Reisephase notwendig, schlägt die PTSESE Alternativen zur Durchführung der aktuellen bzw. folgender Reisephasen vor, schlägt Änderungen am Reisemodell (15, 20, 25) vor und erfasst die auftretenden Änderungen.
- Die PTSESE ermöglicht dem Reisenden das temporäre an die Reisephasendurchführung gebundene Überschreiben und Ablegen persönlicher Reparaturpräferenzen (189) in der erweiterten Reisestatustabelle. Dies führt zu einer Neuberechung des Reisereparatur-Steuerungsmodells. Nach Ablauf einer Reisephase oder der gesamten Reise gelten wieder die im Benutzerprofil (300) voreingestellten Reparaturpräferenzen.

## Patentansprüche

1. Verfahren zur Informationsversorgung (11) eines reisenden Telekommunikationsteilnehmers (1) während des Wechsels von einem Transportmittel (3) eines Reiseabschnitts einer für den Telekommunikationsteilnehmer gebuchten Reise (3,9) zu einem weiteren Transportmitteln (9) eines weiteren Reiseabschnittes der Reise,
wobei während der Reise der zeitliche und örtliche Ist-Verlauf (16,18) der Reise erfasst und mit dem mittels Buchungsdaten zur gebuchten Reise bestimmten Soll-Verlauf (15, 17, 19) hinsichtlich Abweichungen verglichen wird,
wobei unter Berücksichtigung von Abweichungen des Ist-Verlaufes vom Soll-Verlauf Transportmittelwechselinformationen (11, 19-21, 23) betreffend zum Wechsel erforderliche Aktivitäten erstellt werden und Transportmittelwechselinformationen an den Telekommunikationsteilnehmer (1) übermittelt werden (12, 2).

2. Verfahren nach Anspruch 1, **dadurch gekennzeichnet, dass** einem reisenden Telekommunikationsteilnehmer (1) den Wechsel zum nächsten Reiseabschnitt der vom Telekommunikationsteilnehmer gebuchten Reise betreffende Transportmittelwechselinformationen (11, 19-21, 23) übermittelt werden.

3. Verfahren nach einem der vorhergehenden Ansprüche, **dadurch gekennzeichnet, dass** Transportmittelwechselinformationen Informationen über die Lage des vom Reisenden als nächstes zu erreichenden weiteren Transportmittels relativ zu seinem Transportmittel umfassen, insbesondere ein Gate und/oder einen Bahnsteig und/oder eine Himmelsrichtungsangabe und/oder eine Entfernungsangabe.

4. Verfahren nach einem der vorhergehenden Ansprüche, **dadurch gekennzeichnet, dass** Transportmittelwechselinformationen Informationen über Art und/oder Ort von zu veranlassenden Vorgängen umfassen, insbesondere die Lage von Ticketschaltern oder Leihwagenterminals.

5. Verfahren nach einem der vorhergehenden Ansprüche, **dadurch gekennzeichnet, dass** bei einer Detektion von Abweichungen des Ist-Verlaufes vom Sollverlauf aufgrund welcher ein reisender Telekommunikationsteilnehmer möglicherweise das nächste Transportmittel nicht mehr erreichen könnte dem reisenden Telekommunikationsteilnehmer automatisch ein Warnungshinweis übermittelt wird.

6. Verfahren nach einem der vorhergehenden Ansprüche, **dadurch gekennzeichnet, dass** ein Warnungshinweis Informationen über beim Wechsel der Transportmittel erforderliche Detail- Aktivitäten sowie dafür erforderliche und zur Verfügung stehende Zeit enthält.

7. Verfahren nach Anspruch 6, **dadurch gekennzeichnet, dass** die Detail-Aktivitäten den Kauf von Tickets des öffentlichen Nahverkehrs umfassen.

8. Verfahren nach Anspruch 6 oder 7, **dadurch gekennzeichnet, dass** die Detail-Aktivitäten die Benutzung eines Taxis umfassen.

9. Verfahren nach einem der Ansprüche 6-8, **dadurch gekennzeichnet, dass** die Detail-Aktivitäten die Bewegung, insbesondere zu Fuß oder mit einem Taxi, zum Ort des nächsten Reisemittels und/ oder eine Rückgabe von privaten oder geliehenen Kraftfahrzeugen oder sonstiger Reisemittel umfassen

10. Verfahren nach einem der vorhergehenden Ansprüche, **dadurch gekennzeichnet, dass** dem Telekommunikationsteilnehmer Navigationsdaten betreffend seinen Weg zum nächsten Transportmittel übermittelt werden.

11. Verfahren nach einem der vorhergehenden Ansprüche, **dadurch gekennzeichnet, dass** bei Detektion möglicher Probleme hinsichtlich der Erreichbarkeit eines weiteren Transportmittels Verfügbarkeitshinweise oder, Warnungen, oder Aktivitätsempfehlungen unter Verwendung mobiler Kommunikationsgeräte an den Telekommunikationsteilnehmer werden.

12. Verfahren nach einem der vorhergehenden Ansprüche, **dadurch gekennzeichnet, dass** Informationen an den Telekommunikationsteilnehmer per Funk, insbesondere Mobilfunk an dessen Mobilfunkendgerät, übermittelt werden.

13. Verfahren nach einem der vorhergehenden Ansprüche, **dadurch gekennzeichnet, dass** bei der Bestimmung des zeitlichen Soll-Verlaufs der Reise die für den Weg von einem Transportmittel zu einem weiteren Transportmittel erforderliche Zeit berücksichtigt wird.

14. Verfahren nach einem der vorhergehenden Ansprüche, **dadurch gekennzeichnet, dass** bei der Bestimmung des zeitlichen Soll-Verlaufs der Reise die zum Erwerb von Fahrkarten erforderliche Zeit berücksichtigt wird.

15. Verfahren nach einem der vorhergehenden Ansprüche, **dadurch gekennzeichnet, dass** bei der Bestimmung des zeitlichen Soll-Verlaufs der Reise die zum Durchlaufen von Kontrollen, insbesondere Passkontrollen, Einreisekontrollen, Gepäckkontrollen, erforderliche Zeit berücksichtigt wird.

16. Verfahren nach einem der vorhergehenden Ansprüche, **dadurch gekennzeichnet, dass** bei der Bestimmung des zeitlichen Soll-Verlaufs der Reise die zum check- in in ein nachfolgendes weiteres Transportmittel erforderliche Zeit berücksichtigt wird.

17. Vorrichtung (14), insbesondere zum Durchführen des Verfahrens nach einem der vorhergehenden Ansprüche,
- mit einer Einrichtung zum Bestimmen des Soll-Verlaufs einer für einen Telekommunikationsteilnehmer gebuchte Reise
- mit einer Einrichtung zum Bestimmen des Ist-Verlaufs der Reise
- mit einer Einrichtung zum Vergleichen des Soll-Verlaufs mit dem Ist-Verlauf
- mit einer Einrichtung zum Erstellen von auf dem Ist-Verlauf und dem Soll-Verlauf basierenden, den Wechsel des reisenden Telekommunikationsteilnehmer vom aktuellen Transportmittel der Reise zu einem nachfolgenden weiteren Transportmittel der Reise betreffenden Transportmittelwechselinformationen für den Telekommunikationsteilnehmer
- mit einer Einrichtung zum Übermitteln der Transportmittelwechselinformationen an den Telekommunikationsteilnehmer.

18. Programmprodukt, insbesondere Datenträger, zur Durchführung des Verfahrens nach einem der Ansprüche 1-16.
